(19) Europäisches Patentamt
European Patent Office
Office européen des brevets

(11) **EP 3 345 397 B1**

(12) **EUROPEAN PATENT SPECIFICATION**

(45) Date of publication and mention
of the grant of the patent:
**22.10.2025 Bulletin 2025/43**

(21) Application number: **16840457.2**

(22) Date of filing: **26.08.2016**

(51) International Patent Classification (IPC):
*H04N 19/157* (2014.01)   *H04N 19/12* (2014.01)
*H04N 19/122* (2014.01)   *H04N 19/176* (2014.01)
*H04N 19/124* (2014.01)

(52) Cooperative Patent Classification (CPC):
**H04N 19/176; H04N 19/12; H04N 19/122;
H04N 19/124; H04N 19/157**

(86) International application number:
**PCT/CA2016/051009**

(87) International publication number:
**WO 2017/035638 (09.03.2017 Gazette 2017/10)**

(54) **VIDEO CODING WITH DELAYED RECONSTRUCTION**

VIDEOCODIERUNG MIT VERZÖGERTER REKONSTRUKTION

CODAGE VIDÉO AVEC RECONSTRUCTION RETARDÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2015 US 201514842865**

(43) Date of publication of application:
**11.07.2018 Bulletin 2018/28**

(73) Proprietor: **Malikie Innovations Limited
Dun Laoghaire, Dublin A96 VR66 (IE)**

(72) Inventor: **HE, Dake
Waterloo, Ontario N2K 0A7 (CA)**

(74) Representative: **MERH-IP Matias Erny Reichl
Hoffmann
Patentanwälte PartG mbB
Paul-Heyse-Straße 29
80336 München (DE)**

(56) References cited:
WO-A1-2004/004359     CA-A1- 2 491 522
CA-A1- 2 720 697     US-A1- 2012 044 990
US-A1- 2015 063 444     US-A1- 2015 208 082

## Description

### FIELD

The present application generally relates to data compression and, in particular, to methods and devices for video coding that use delayed reconstruction.

### BACKGROUND

Data compression occurs in a number of contexts. It is very commonly used in communications and computer networking to store, transmit, and reproduce information efficiently. It finds particular application in the encoding of images, audio and video. Video presents a significant challenge to data compression because of the large amount of data required for each video frame and the speed with which encoding and decoding often needs to occur. Among the standards used for video encoding and decoding are the ITU-T H.264/AVC video coding standard and the HEVC/ITU-T H.265 video coding standard. The next-generation video encoding standard is currently being planned, possibly through a joint initiative of MPEG-ITU, and is tentatively termed the future generation video coding standard or ITU-T H.266. In parallel, Google is developing its successor (VPx) to VP8 and VP9 video coding formats, and the IETF NetVC (Internet Video Coding) working group is also developing a next generation video coding standard.

H.264/AVC and HEVC/H.265, like many data compression processes, rely on predictive coding so as to compress data by exploiting redundancies in the data. Some predictions are spatial, meaning that data within an image/frame/picture is used as the basis for predicting data elsewhere within the image/frame/picture. This predictive operation exploits uniformity in the image or picture. Some predictions, at least in the case of video, are temporal, meaning that data in one frame/picture is used as the basis for predicting data in a temporally nearby frame/picture. This predictive operation exploits similarities in a sequence of pictures or images. Predictive coding is also used in many image and audio coding processes.

In a predictive encoding process a prediction generator creates a prediction for current source data based on previously-reconstructed data; that is, previous source data that has been encoded and then decoded. The prediction is subtracted from the original source data and, because the prediction may not exactly match the original source data, a residual may result. The bitstream of encoded data contains the encoded residual and some additional information. The additional information may include prediction information that ensures that the encoder and decoder arrive at the same prediction. In many coding processes, at least some portion of the encoding process is lossy, meaning that the residual data reconstructed at the decoder may contain distortion. The reconstructed data is generated by adding the reconstructed residual data to the prediction, thereby incorporating the distortion into the reconstructed data. This process is typically known as predictive video coding and is the basis for many coding schemes, such as H.264/AVC and HEVC/H.265.

The document US2015208082 discloses a hybrid motion compensated transform encoder and decoder, wherein the transform and quantization module selects a transform parameter or a quantization parameter based on block prediction data, calculated before a picture is actually coded by performing motion search and inter prediction on a given number of following pictures and by determining how often each block of a picture is to be referenced by later pictures within a given encoding delay.

### BRIEF DESCRIPTION OF THE DRAWINGS

Reference will now be made, by way of example, to the accompanying drawings which show example embodiments of the present application, and in which:

Figure 1 shows, in block diagram form, a conventional predictive media encoder;
Figure 2 shows, in block diagram form, a conventional predictive media decoder;
Figure 3 shows, in block diagram form, an example of an encoder with delayed reconstruction;
Figure 4 shows, in block diagram form, an example of a decoder with delayed reconstruction;
Figure 5 shows an illustrative example of a portion of an image;
Figure 6 shows a flowchart illustrating an example method for decoding video encoded using delayed reconstruction;
Figure 7 shows, in block diagram form, another example of a decoder with delayed reconstruction;
Figure 8 shows a flowchart illustrating an example method for encoding video using delayed reconstruction;
Figure 9 shows a simplified block diagram of an example embodiment of an encoder; and

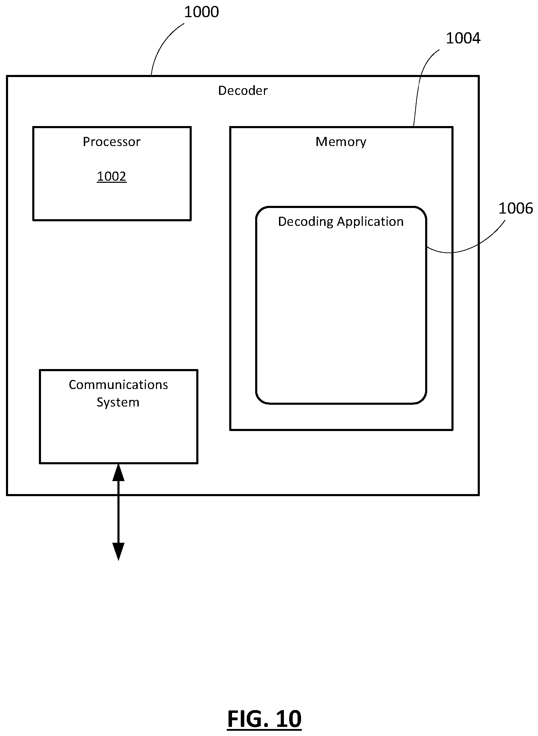

Figure 10 shows a simplified block diagram of an example embodiment of a decoder.

Similar reference numerals may have been used in different figures to denote similar components.

**EP 3 345 397 B1**

## DESCRIPTION OF EXAMPLE EMBODIMENTS

The present application describes methods of encoding and decoding data, for example video, using delayed reconstruction according to the appended claims.

Other aspects and features of the present application will be understood by those of ordinary skill in the art from a review of the following description of examples in conjunction with the accompanying figures.

In the present application, the term "and/or" is intended to cover all possible combination and sub-combinations of the listed elements, including any one of the listed elements alone, any sub-combination, or all of the elements, and without necessarily excluding additional elements.

In the present application, the phrase "at least one of ... or... " is intended to cover any one or more of the listed elements, including any one of the listed elements alone, any sub-combination, or all of the elements, without necessarily excluding any additional elements, and without necessarily requiring all of the elements.

In the description that follows, some example embodiments are described with reference to the H.264/AVC standard for video coding and/or the newly-developed HEVC/H.265 standard. Those ordinarily skilled in the art will understand that references to H.264/AVC or HEVC/H.265 are for illustration and are not meant to suggest that the present application is limited to modifications to those standards. The present application describes encoding and decoding methods and devices that may be incorporated as a part of possible future video coding standards, multi-view coding standards, scalable video coding standards, and reconfigurable video coding standards.

It will also be appreciated that the present application is not limited to video coding, but may be applied to other media, including the coding of images or audio.

In the description that follows, when referring to video or images the terms frame, picture, slice, tile and rectangular slice group may be used somewhat interchangeably. Those of skill in the art will appreciate that, in the case of the H.264 or the HEVC standard, a frame may contain one or more slices. A series of frames/pictures may be called a "sequence" or "Group of Pictures" (GoP) in some cases. Other terms may be used in other video coding standards. It will also be appreciated that certain encoding/decoding operations might be performed on a frame-by-frame basis, some are performed on a slice-by-slice basis, some picture-by-picture, some tile-by-tile, and some by rectangular slice group, depending on the particular requirements or terminology of the applicable image or video coding standard. In any particular embodiment, depending on the implementation, the operations described below may be performed in connection with frames and/or slices and/or pictures and/or tiles and/or rectangular slice groups, as the case may be. Accordingly, those ordinarily skilled in the art will understand, in light of the present disclosure, whether particular operations or processes described herein and particular references to frames, slices, pictures, tiles, rectangular slice groups are applicable to frames, slices, pictures, tiles, rectangular slice groups, or some or all of those for a given embodiment. This also applies to coding tree units, coding units, prediction units, transform units, etc., as will become apparent in light of the description below.

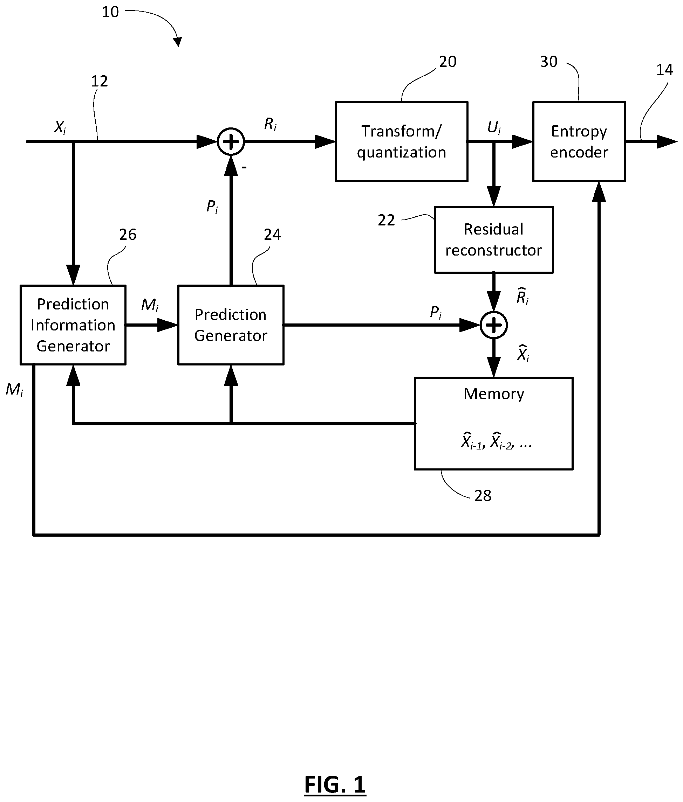

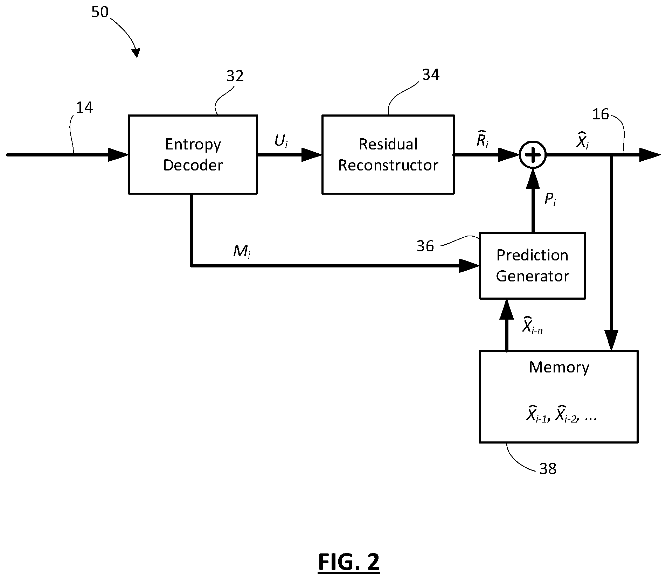

Reference is now made to Figure 1, which shows, in block diagram form, an encoder 10 for encoding media using a predictive coding process. Reference is also made to Figure 2, which shows a block diagram of a decoder 50 for decoding encoded media using the predictive coding process. It will be appreciated that the encoder 10 and decoder 50 described herein may each be implemented on an application-specific or general purpose computing device, containing one or more processing elements and memory. The operations performed by the encoder 10 or decoder 50, as the case may be, may be implemented by way of application-specific integrated circuit, for example, or by way of stored program instructions executable by a general purpose processor. The device may include additional software, including, for example, an operating system for controlling basic device functions. The range of devices and platforms within which the encoder 10 or decoder 50 may be implemented will be appreciated by those ordinarily skilled in the art having regard to the following description.

The encoder 10 receives a data source 12, labeled $X_i$, and produces an encoded bitstream 14. The source $X_i$, may be, for example, pixel data for an image, pixel data for a video, or some other original data. The index $i$ is intended to indicate that the source $X_i$ is a "current" set of samples to be encoded, such as a block of pixels, a non-rectangular set of pixels, *etc.*

The decoder 50 receives the encoded bitstream 14 and outputs reconstructed source data 16, labeled $\hat{X}_i$. The notation "^" over the source symbol is intended to indicate that this data has been reconstructed from the encoding-decoding process and, as such, may contain distortion.

The encoder 10 includes a transform/quantization stage 20, a residual reconstructor 22, a prediction generator 24, a prediction information generator 26, and memory 28. The source $X_i$ is converted to a residual $R_i$ by subtracting a prediction $P_i$ from the source $X_i$. The residual is then transformed and quantized to obtain transform domain residuals, which together with the transform and quantization parameters are the residual information $U_i$. The residual information is encoded by an entropy encoder 30.

The predictive feedback loop then decodes the encoded residual using the residual reconstrutcor 22 to obtain a reconstructed residual $\hat{R}_i$. The reconstructed residual $\hat{R}_i$ is then added to the same prediction $P_i$ to create the reconstructed

3

source data $\hat{X}_i$. That reconstructed source data $\hat{X}_i$ is stored in the memory 28. The memory 28 contains previously-reconstructed data, e.g. $\hat{X}_{i-1}$, $\hat{X}_{i-2}$, ... . Note that the previously-reconstructed data $\hat{X}_{i-1}$, $\hat{X}_{i-2}$, ... does not necessarily refer to previously-reconstructed frames/pictures in a video sequence; it may also include previously-reconstructed pixel data from the same picture/image in the case of video/image coding. Further note that the memory 28 might impose a limit on the amount of data to be stored, and older data might be discarded if that limit is reached.

The prediction $P_i$ is a prediction of the source data for index $i$ generated by the prediction generator 24. The prediction generator 24 uses some previously-reconstructed data, $\hat{X}_{i-1}$, $\hat{X}_{i-2}$, ... , stored in the memory 28, to generate the prediction. In this example, the prediction information generator 26 determines how to make the prediction and (in some cases) what previously-reconstructed data will serve as the source for the prediction. The prediction information generator 26 may make this decision based upon the current source data $\hat{X}_i$ and the history of the source, *i.e.* the previously-reconstructed data from the memory 28. As an example, with reference to video coding, the prediction information generator 26 may determine whether to use intra-coding or inter-coding, and select an intra-coding mode or reference frame and motion vector(s). The details of the various possible predictive operations are not germane to the present description and will not be detailed here. Likewise, there are various mechanisms, including rate-distortion optimization-based searches, for selecting a mode, motion vector, *etc.,* that are not described in detail in the present application but will be understood by those skilled in the art. The prediction information generator 26 outputs "prediction information" $M_i$, which is then used by the prediction generator 24 as "instructions" for producing the prediction $P_i$.

The prediction information $M_i$ is sent to the decoder 50 along with the encoded residual data. The entropy encoder 30 that encodes the residual information and prediction information produces the bitstream 14 of encoded data.

At the decoder 50, the bitstream 14 is decoded by an entropy decoder 32, which extracts and/or reconstructs the prediction information $M_i$ and residual information $U_i$. A residual reconstructor 34 uses the residual information $U_i$, such as transform shape/size/type, block partition (i.e. partition of a block into transform blocks), quantization parameters, and the transform domain residuals themselves, to produce reconstructed pixel-domain residual data $\hat{R}_i$. Using a prediction generator 36, a prediction $P_i$ is created based upon the prediction information $M_i$ and the previously-reconstructed data $\hat{X}_{i-1}$, $\hat{X}_{i-2}$, ... stored in the memory 38. This is the same prediction $P_i$ generated at the encoder 10 to produce the residual data $R_i$. At the decoder 50, this prediction $P_i$ is added to the reconstructed residual data $\hat{R}_i$ to produce the reconstructed source data $\hat{X}_i$. The reconstructed source data $\hat{X}_i$ is then output and is stored in the memory 38 for possible use in subsequent prediction operations. Note that the memory 38 might impose a limit on the amount of data to be stored, and older data might be discarded if that limit is reached.

Predictive video coding of the type used in H.265/HEVC is advantageous in that there is no picture delay in reconstruction. In other words, the reconstruction of the current frame is not affected by how the next pictures are reconstructed. Predictive video coding may be contrasted with causal video coding (CVC), which permits original image blocks previously-coded to be used in coding a current image block. This results in an improvement in rate-distortion performance over predictive video coding other than in some special cases where they preform equally well. A joint video coding system, in which multiple blocks are encoded simultaneously to achieve an optimal coding, typically provides the best outcome from a rate-distortion point of view, but is impractical due to the delay involved and the computational complexity involved in joint optimization of a large number of parameters.

The present application proposes a practical video coding process that realizes potential CVC gains with limited reconstruction delay. In particular, the present application proposes a process in which the reconstruction delay is an image block, a scan line, a number of scan lines, a picture, multiple pictures, or some other portion of a sequence. Many non-real-time (*e.g.* non-video-conferencing) playback systems are capable of tolerating a reconstruction delay of a few pictures without noticeable impact. The process tailors the coding of residuals on the basis of prediction information from future-coded residuals. That is, the coding of residuals for a current block waits until prediction information from future blocks is available before coding the residuals of the current block so that the parameters used for coding of the residuals can take into account the prediction information from future blocks. This allows for the potential of more effective selection of residual-coding parameters and methods.

Example processes described below separate the coding of syntax elements into two sets: the prediction information $M_i$, and the residual information $U_i$. The prediction information $M_i$ includes information for generating the prediction $P_i$. This may include, for example, a prediction mode (*e.g.* an intra-coding mode), motion vector(s), sizes/shapes of prediction units, or other parameters that specify how to go about generating the prediction $P_i$. The residual information $U_i$ includes information for reconstructing the residuals $\hat{R}_i$. For example, the residual information $U_i$ may include the size and shape of the transform unit, the transform type/selection (*e.g.* unity, DCT, DST, 2D versus horizontal or vertical, *etc.*), the coded residuals themselves, or other parameters and data that specify how to reconstruct the residuals $\hat{R}_i$.

Ideally $U_i$ and $M_i$ do not intersect, however the present application does not require $U_i \cap M_i = \emptyset$, where $\emptyset$ denotes the empty (null) set. In the case where some information is present in both $U_i$ and $M_i$, i.e. $U_i \cap M_i = \emptyset$, the entropy decoder only decodes such information in $U_i \cap M_i$ once, and populates them in both $U_i$ and $M_i$.

In general terms, the processes described below use $M_1 M_2 \cdots M_i \cdots$ and $U_1 U_2 \cdots U_i \cdots$ in a staggered manner. Specifically, the processing of $M_1 M_2 \cdots M_i$ is $k > 0$ steps/stages ahead of that of $U_1 U_2 \cdots U_i \cdots$, where $k$ is the reconstruction delay. A buffer may be used to store $M_{i+k}M_{i+k-1} \cdots M_i$ until $U_i$ is processed. The parameter $k$ may be predetermined or learned on the fly from the history and/or side information made available. For example, $k$ may be determined by the largest (or average) distance in indices between a set of image blocks to be reconstructed and the reference image blocks used to generate prediction of the image blocks in the set.

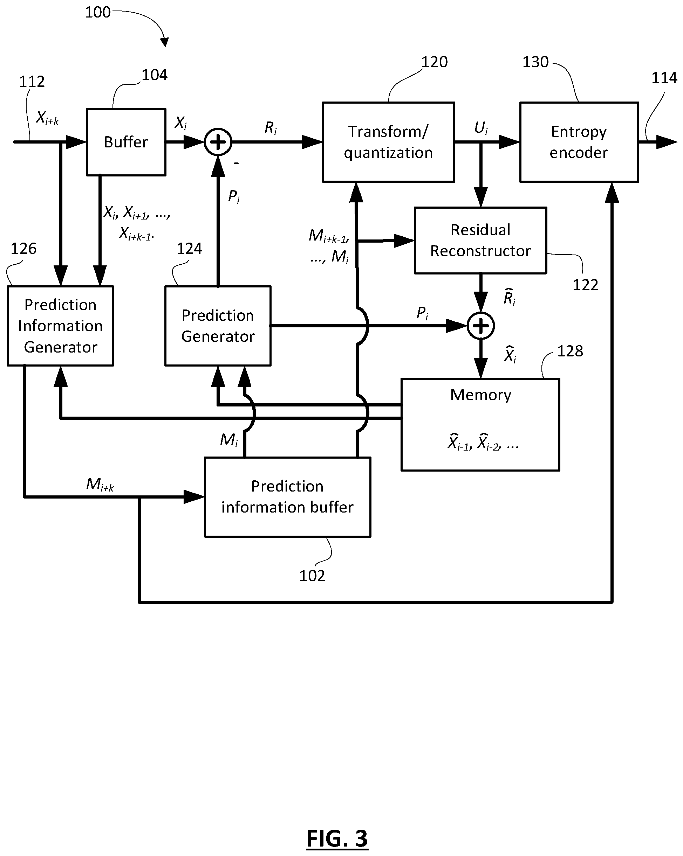

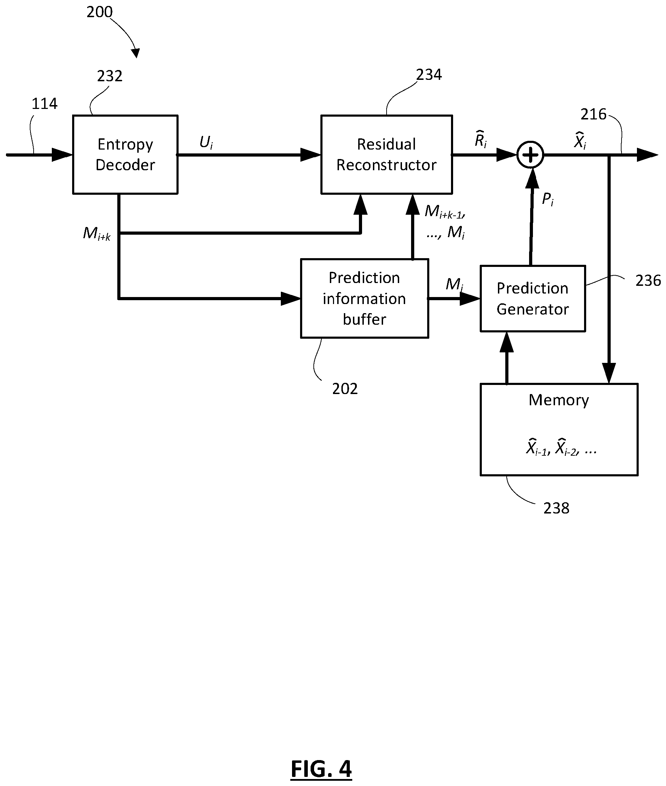

Reference is now made to Figures 3 and 4. Figure 3 shows a block diagram of one example of an encoder 100 in accordance with the present application. Figure 4 shows a block diagram of one example of a decoder 200 in accordance with the present application.

The encoder 100 includes a buffer 104 at the input so as to store input image blocks or pictures before processing to generate residuals. The encoder 100 also decouples the generation of prediction information from its immediate use in prediction generation since the prediction information creation occurs ahead of residual processing.

The encoder 100 includes a prediction information generator 126 and a prediction generator 124, but instead of directly providing prediction information to the prediction generator 124, the prediction information generator 126 supplies the prediction information to a prediction information buffer 102. The prediction information generator 126 accepts the image blocks, $X_i$, $X_{i+1}$, $\cdots$, $X_{i+k-1}$, stored in the buffer 104 as input. The prediction information buffer 102 collects prediction information for at least $k$ cycles (blocks, lines, pictures, *etc.,* as the case may be), $M_{i+k}$, $M_{i+k-1}$, ... , $M_i$, and supplies the $i^{th}$ prediction information $M_i$ to the prediction generator 124 for generating the prediction $P_i$. A memory 128 stores reconstructed picture data obtained from the feedback reconstruction loop in the encoder 100 and the stored reconstructed picture data is available to the prediction generator 124 for creating the prediction $P_i$ and is available to the prediction information generator 126 for generating the prediction information.

The residuals $R_i$ are processed by a transform/quantization stage 120, however it will be noted that the prediction information buffer supplies the transform/quantization stage 120 with prediction information. In this example embodiment, the prediction information buffer 102 supplies the transform/quantization stage 120 with "future" prediction information $M_{i+y-1}, ... , M_{i+1}$ in addition to the current prediction information $Mi$. The transform/quantization stage 120 may then use the supplied prediction information in determining how to transform and/or quantize the residuals to create residual information $U_i$.

In the claimed embodiments, the prediction information buffer 102 may only provide the transform/quantization stage 120 with future prediction information, $M_{i+k-1}, ... , M_{i+1}$, and not with the current prediction information $M_i$.

The prediction information from the prediction information buffer 102 is also available to a residual reconstructor 122 in the feedback loop of the encoder 100 so that the residual reconstructor 122 may make the same prediction-information-based selection of transform and/or quantization parameters for reconstruction of the residuals that will occur in the decoder 200 (Fig. 4).

The prediction information and the residual information is encoded by the entropy encoder 130 to generate the bitstream 114 of encoded data.

The decoder 200 also includes a prediction information buffer 202 that stores prediction information as it is decoded from the bitstream 114 by an entropy decoder 232. Observe that a residual reconstructor 234 processes residual information $U_i$ as output from the entropy decoder 232 at time when the prediction information buffer 202 can make "future" prediction information $M_{i+k-1}, ... , M_{i+1}$ available to the residual reconstructor 234 along with $M_{i+k}$ as output from the entropy decoder 232. Accordingly, residual reconstructor 234, which performs functions such as inverse quantization and inverse transform, is able to select transform and/or quantization parameters based, at least in part, on prediction information.

The prediction information buffer 202 also supplies current prediction information $M_i$ to a prediction generator 236, which, with previously-reconstructed picture data from a memory 238, generates the prediction $P_i$ used to create the reconstructed image data $\hat{X}_i$.

In both encoder 100 and decoder 200, prediction information is buffered and then used to guide the processing of residual information. In particular, the prediction information may be used in the selection of suitable transform units, transform types, quantization parameters, or other such parameters. The prediction information provides information about how the to-be reconstructed image data will be used in future predictions. The number of times that particular pixels are used in future predictions may influence the selection of partitions (*e.g.* transform size), quantization parameters, transform types, etc. With such information, it might be beneficial to define a partition of $\hat{X}_i$ (or equivalently $\hat{R}_i$) such that pixels with the same reference counts are grouped together. Such a partition, along with $U_i$ and possibly $M_i$, might be used to define the transform units in reconstructing $\hat{R}_i$, for example.

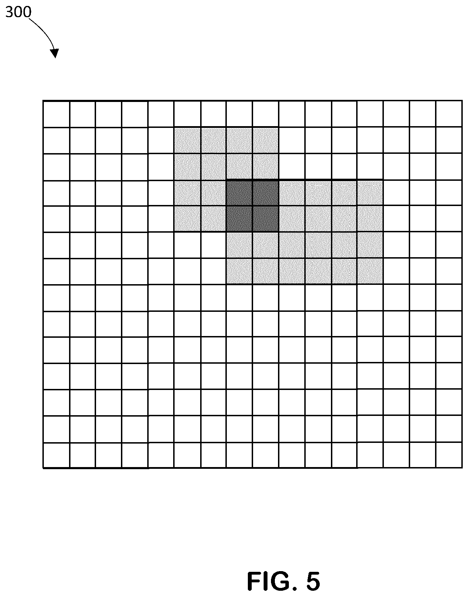

Reference is now made to Figure 5, which shows an illustrative example of a portion of an image 300. The lightly-shaded pixels are referenced once in a prediction operation (*e.g.* motion estimation) for reconstructing other image data. The dark-shaded pixels are referenced twice in prediction operations for reconstructing other image data. Examples of using pixel-reference counts for (1) transform unit size selection, (2) quantization parameter selection, and (3) partition and transform type selection are provided below.

Transform Unit Size Selection

It may be beneficial to use a separate 2x2 transform for the dark-shaded block, and some different transform block shapes and sizes (*e.g.* 2x4, 4x4, 4x8) for the light-shaded regions. Such a partitioning, as claimed, may be justified by the following observations:

  1. Since motion estimation typically tries to capture linear motion of rigid objects, pixels with the same reference counts often have stronger spatial correlation than pixels with different reference counts.
  2. Transforms like DCT (discrete cosine transform) or KLT (Karhunen-Loève transform) work better on image blocks with stronger spatial correlation than those with weaker spatial correlation.
  3. One typically expects uniform reconstruction quality for pixels with the same reference counts and close to each other. Since a quantization parameter is typically defined for and associated with one or more transform units, it is thus natural to group pixels with the same reference counts into a transform unit so that they share the same quantization parameter and in turn have close to uniform reconstruction quality. Furthermore, quantization is typically applied to transform coefficients in the transform domain rather than pixels in the spatial domain. It would be more difficult if not impossible to adjust quantization step sizes in the transform domain to obtain desired reconstruction quality distribution in the spatial domain.

This example can be generalized to include multiple reference pictures. For example, corresponding to each pixel in $\hat{X}_i$, a k-tuple $(c_1, \cdots, c_k)$ might be maintained, where $c_j$, $1 \leq j \leq k$, indicates how many times the pixel is referenced in generating prediction for $\hat{X}_{i-j}$. The partition of $\hat{X}_i$ (or equivalently $\hat{R}_i$) might then depend upon $(c_1, \cdots, c_k)$, for example, pixels with the same $(c_1, \cdots, c_k)$ or $\phi(c_1, \cdots, c_k)$ are grouped together to form transform blocks, where $\phi(c_1, \cdots, c_k)$ denotes a mapping function of $(c_1, \cdots, c_k)$. An example of $\phi(c_1, \cdots, c_k)$ is

$$\phi(c_1, \cdots, c_k) = \sum_{j=1}^{k} w_j c_j$$

where $w_j$ is a weighting factor such that $\sum_{j=1}^{k} w_j$ is a constant. Another example of $\phi(c_1, \cdots, c_k)$ is

$$\phi(c_1, \cdots, c_k) = \sum_{j=1}^{k} w_j clip(c_j, L, H)$$

where $clip(c_j, L, H) = \begin{cases} L & if\ c_j < L \\ c_j & if\ L \leq c_j < H \\ H & if\ c_j > H \end{cases}$ is non-linear.

Common choices of $(L, H)$, $L \leq H$, are (0, 1), (0, 2), (1, 2), etc.

As an example, the refinement of transform units might be under the constraint of available transform sizes and shapes. In the cases where a region of pixels with the same reference counts has an irregular shape that does not have a corresponding transform, an encoder or decoder might either subdivide the region into smaller transform units for which matching transforms exist or combine the region with a neighboring region possibly with different reference counts to define transform units for which matching transforms exist.

Quantization Parameter Selection

As an example, the prediction information $M_{i+k}M_{i+k-1} \cdots M_i$ is used in determining the quantization parameters used in reconstructing $\hat{R}_i$, in some cases along with information in $U_i$. Referring still to the example shown in Figure 5, it may be beneficial to use a smaller quantization parameter for the dark-shaded pixels than the quantization parameters used for the light-shaded pixels. As such, suppose that a base quantization parameter $Q_i$ is specified in $U_i$. Based on $M_{i+k}$, $M_{i+k-1}$, $\cdots$, $M_i$, $Q_i$ might be modified to reconstruct different portions of $\hat{R}_i$, *e.g.*, decreased for an area that is referenced more often and increased for an area that is referenced less often. In other words, the effective quantization parameter for an area in $\hat{R}_i$, might be a function of the number of times for which the area is referenced as computed in $M_{i+k}$, $M_{i+k-1}$, $\cdots$, $M_i$. In one example, $Q_i$ might be a quantization parameter defined in HEVC.

Suppose that a block in $\hat{R}_i$ to be reconstructed is not referenced in generating prediction according to $M_{i+k}$, $M_{i+k-1}$,

$\cdots$ , $M_i$, $Q_i + \Delta_0$ might be used in reconstructing the block. Suppose that a block is referenced one time in prediction generation, $Q_i + \Delta_1$ might be used; and similarly if a block is referenced c times, $Q_i + \Delta_c$ might be used for the block. Here $\Delta_c$, $c = 0, \dots k,$, is a integer (can be negative), that is either signaled to the decoder (*e.g.* decoded from the bitstream), or inferred by using a default logic (*e.g.* not present in the bitstream). One example of $\Delta_c$ is $\Delta_c = 1 - c$. In general, $Q_i + \Delta_c$ decreases as the reference count c increases: it may be larger than $Q_i$ if the current block is not referenced at all, and smaller than $Q_i$ if the current block is referenced multiple times. Note that $Q_i + \Delta_c$ might be further clipped to be in an acceptable range, *e.g.* [0, 51] or [-6, 45]. This example can be generalized to include multiple reference pictures, where corresponding to each pixel in $\hat{X}_i$, a k-tuple $(c_1, \cdots, c_k)$ might be maintained, where $c_j$, $1 \leq j \leq k$, indicates how many times the pixel is referenced in generating prediction for $\hat{X}_{i\cdot j}$. Suppose further that pixels with the same $(c_1, \cdots, c_k)$ are grouped together to form transform blocks. The parameter used for a block associated with $(c_1, \cdots, c_k)$ might be a function of $(c_1, \cdots, c_k)$, *e.g.* $Q_i + \Delta_{(c_1, \cdots, c_k)}$. An example of $\Delta_{(c_1, \cdots, c_k)}$ is $\Delta_{(c_1, \cdots, c_k)} = T - \sum_{j=1}^{k} w_j c_j$, where $w_j$ is a non-negative weighting factor, and $T$ is a constant. Possible choices of $w_j$ include $w_j = 1 \gg (j - 1) = 2^{j-1}$, or $w_j = \begin{cases} 1 & j < 3 \\ 0 & j \geq 3 \end{cases}$. Correspondingly, $T$ might be set as $T = 1$. Another

example of of $\Delta_{(c_1, \cdots, c_k)}$ is $\Delta_{(c_1, \cdots, c_k)} = T - \sum_{j=1}^{k} clip(c_j, L, H)$, where $clip(c_j, L, H) = \begin{cases} L & if\ c_j < L \\ c_j & if\ L \leq c_j < H \\ H & if\ c_j > H \end{cases}$ is

an example of a nonlinear function. Possible choices of $(L, H)$, $L \leq H$, include $(0, 1)$, $(0, 2)$, $(1, 2)$, etc. The constant $T$ might be set as $T = Lk + 1$. When $(L, H) = (0,1)$, quantization parameter $Q_i$ is adjusted so that quality is better preserved for regions that are repeatedly referenced in a number of image blocks/pictures. Such practice might be beneficial for preserving visual quality since the human visual system is sensitive to large distortion that is persistent in a time period.

Note that in some embodiments, $Q_i$ might simply be a quantization step size. In those cases, $Q_i \Delta_{(c_1, \cdots, c_k)}$ might be used to adjust the quantization size for a block associated with $(c_1, \cdots, c_k)$. Here examples of $\Delta_{(c_1, \cdots, c_k)}$ are

$\Delta_{(c_1, \cdots, c_k)} = a^{T - \sum_{j=1}^{k} w_j c_j}$ or $\Delta_{(c_1, \cdots, c_k)} = a^{T - \sum_{j=1}^{k} clip(c_j, L, H)}$, where $a$ is a constant, e.g. $2^{1/6}$ or a finite precision approximation of $2^{1/6}$.

Partition and Transform Type

As an example, the prediction information $M_{i+k}$, $M_{i+k-1}$, $\cdots$, $M_i$ is used in determining what partitions and transforms are to be used in reconstructing $\hat{R}_i$, in some cases together with information in $U_i$. Again referencing the example in Figure 5, it might be beneficial to use the identity transform or the Hadamard transform on the dark-shaded pixels, and discrete cosine transforms (DCT) for the light-shaded pixels, to avoid boundary effects of DCT in the smaller region of dark-shaded pixels.

In another example, the identity transform may be used for blocks with less than $N$ pixels in $\hat{X}_i$, where $N$ is a positive integer (*e.g* 4, 8, 16...). In another example where an image block includes multiple rows (or columns, respectively) of pixels with the same reference counts (obtained from $M_{i+k}$, $M_{i+k-1}$, $\cdots$, $M_i$) but the counts might be different for different rows (or columns, respectively), a 1D transform like 1D DCT for rows (or columns, respectively) may be selected. In a further example, where an image block includes pixels with high reference counts according to $M_{i+k}$, $M_{i+k-1}$, $\cdots$, $M_i$, KLT may be selected as the transform for the image block if the reference counts are greater than a threshold. In yet another example, the selection of a transform for a block in reconstructing $\hat{R}_i$ might depend upon $(c_1, \cdots, c_k)$, where $c_j$, $1 \leq j \leq k$, indicates how many times the pixel is referenced in generating prediction for $\hat{X}_{i+j}$. For example, the identity transform might be used if $\sum_{j=1}^{k} c_j \geq K$ or more generally $\sum_{j=1}^{k} w_j c_j \geq K$, where $K$ is a positive integer that is either known to or decoded by the decoder, and $w_j$ is a non-negative weighting factor similar to those described above.

It will be understood that in the claimed embodiments the prediction information $M_{i+k}$, $M_{i+k-1}$, $\cdots$, $M_i$ may be used to determine a combination of transform selection, block structure, and quantization parameters used in reconstructing $\hat{R}_i$.

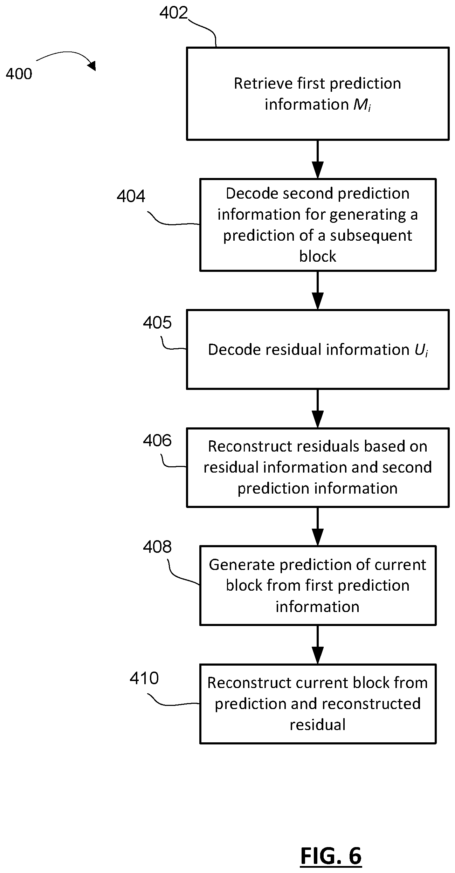

Reference will now be made to Figure 6, which shows, in flowchart form, one example method 400 for decoding video data from a bitstream of encoded data, in accordance with one aspect of the present application. The method 400, in this example, is for reconstructing $n$ blocks, $\hat{X}_1, \cdots, \hat{X}_n$.

In operation 402, the decoder retrieves first prediction information $M_i$. The first prediction information $M_i$ was decoded previously and has been buffered. The first prediction information specifies how to generate a prediction for the current block.

The decoder then, in operation 404, decodes second prediction information $M_{i+x}$, where x is an integer and $0 < x \leq k$, and k is the maximum delay value, for a subsequent block. The block is subsequent in that it is subsequent in the coding process, meaning that its encoding/decoding might rely upon reconstructed data from the current block. In a simple embodiment, x = k = 1, wherein the decoder only decodes (prediction information) 1 block ahead of the reconstruction of the current block. In the claimed embodiment, the decoder decodes prediction information k blocks, i.e., x = k, ahead of the reconstruction of the current block. In other embodiments, in operation 404 the decoder decodes prediction information for k blocks (e.g. for x = 1 to k). In the claimed embodiments, the prediction information decoded in operation 404 includes information that references block i in generating prediction for reconstructing block i+x. In other words, the prediction information $M_i$ for reconstructing block i might be decoded and obtained in k possible steps: i-k, i-k+1, ..., i-1, referencing block i-k, block i-k+1, ..., block i-1, respectively. For clarity, the prediction information decoded at time i-x for a future block i might sometimes be referred to as $M_{i,i-x}$, and by the same notation the prediction information decoded at time i for a future block i+x might sometimes be referred to as $M_{i+x,i}$.

In operation 405, the decoder decodes residual information $U_i$, e.g. quantized transform domain coefficients, transform shape/size/type, and quantization parameters. The residual information provides the syntax elements for reconstructing the current block from its prediction. The quantized transform domain coefficients are typically encoded as residual data syntax elements, such as absolute coefficient values, last significant-coefficient coordinates, significant coefficient flags, sign values, greater-than-one flags, etc. Accordingly, the decoding of residual information may also be referred to as the decoding of residual data syntax elements.

In operation 406, the decoder reconstructs the residuals $\hat{R}_i$ for the current block based upon the decoded residual data syntax elements (residual information $U_i$) and the second prediction information $M_{i+x}$. As noted above, the second prediction information may, in some embodiments, be $M_{i+1}$. In some embodiments, the second prediction information may be $M_{i+1},...,M_{i+k}$. In yet other embodiments the reconstruction may further be based upon on the first prediction information $M_i$.

As mentioned above, the second prediction information may influence the reconstruction of the residuals in one of many possible ways in different embodiments. In one example, the second prediction information provides a count of the number of times that each pixel in the current block is referenced in generating subsequent predictions. The frequency of use in predictions may be a basis for determining the partitioning of the current block, the transform type(s), the transform size(s), the quantization step size, or other quantization parameters and/or transform parameters.

In operation 408, the decoder generates the prediction $P_i$ of the current block using the first prediction information $M_i$ and stored reconstructed data from previously reconstructed blocks. The prediction $P_i$ is then used together with the reconstructed residual $\hat{R}_i$ in operation 410 to reconstruct the current block $\hat{X}_i$.

In another example, the decoding process may be described as follows. The process may be applied in the reconstruction of n blocks, $\hat{X}_1, \cdots \hat{X}_n$, where n > 0 and is either known a priori or decoded from the bitstream. Assume that the delay parameter k > 0 is known a priori or is decoded from the bitstream. One example of the decoding process may then be described as:

    1. Initialize i = -k.
    2. If $i \leq 0$, decode $M_{i+k}$ and skip to Step 3; otherwise, do the following:

        (a) if $i + k \leq n$, decode ($M_{i+k}$, $U_i$); otherwise, set $M_{i+k}$ as null information and decode $U_i$.
        (b) generate $\hat{R}_i$ given $U_i$ and $M_{i+k}$, $M_{i+k-1}$, $\cdots$, $M_i$, i.e., $\hat{R}_i = g_p(U_i, M_{i+k}, M_{i+k-1}, \cdots, M_i)$, where $g_p$ denotes that the generation of the reconstructed residual is a function of the prediction information.
        (c) generate $P_i$ given $M_i$ and $\hat{X}_{i-1}, \cdots, \hat{X}_{i-k}$, where $\hat{X}_{-1}, \cdots \hat{X}_{-k}$, use default reconstructions (e.g. blank blocks or blocks with known popular patterns). In other words, $P_i = f(M_i, \hat{X}_{i-1}, \cdots, \hat{X}_{i-k})$, where f denotes the prediction generator.
        (d) reconstruct $\hat{X}_i = P_i + \hat{R}_i$. Store and output $\hat{X}_i$.

    3. Increment i by 1.
    4. Repeat Steps 2-3 until i = n + 1.

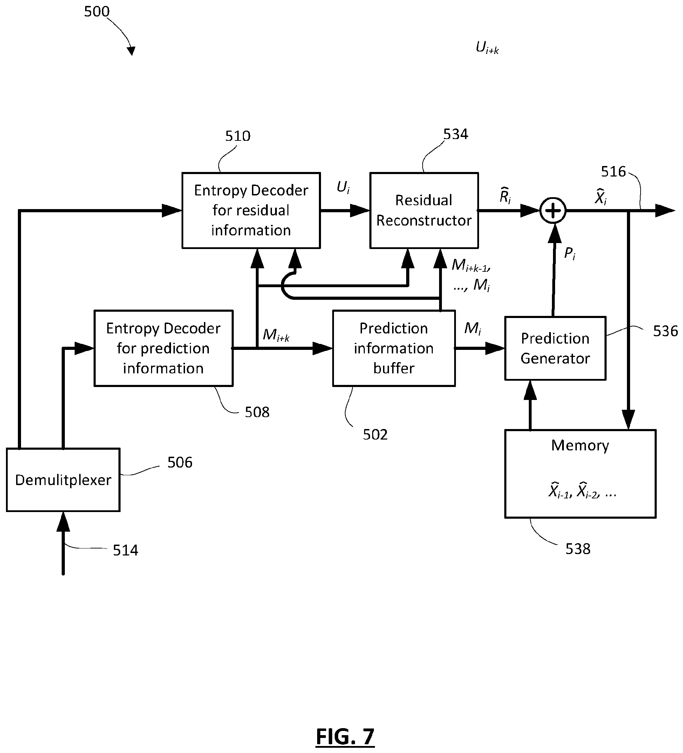

Note that in some example the entropy decoder that outputs $U_i$ might depend, at least in part, upon $M_{i+k}$, $M_{i+k-1}$, $\cdots$, $M_i$. Reference is now made to Figure 7, which shows an example decoder 500 in accordance with another embodiment. In this example, the decoder 500 includes a demultiplexer 506 that separates an incoming bitstream 514 of encoded video into two streams: one relating to prediction information and one relating to residual information. The encoded prediction information is input to an entropy decoder for prediction information 508. The encoded residual information is input to an entropy decoder for residual information 510. The decoder 500 includes a prediction information buffer 502, a prediction generator 536 and a memory 538. The decoded residual information is input to a residual reconstructor 534. As described above, the residual reconstructor 534 may base the reconstruction, at least in part, upon prediction information for subsequent blocks as supplied by the prediction information buffer 502. The reconstructed residual is added to the prediction to create the reconstructed current block, which is output as the decoded video 516.

In this example, however, the entropy decoder for residual information 510 may also make use of the prediction information for subsequent blocks in decoding the bitstream of encoded residual information. In this example, the decoding process may be described, in one embodiment, as follows:

1. Initialize $i = -k$.
2. If $i + k \leq n$, decode $M_{i+k}$; otherwise, set $M_{i+k}$ as null information;
3. If $i \leq 0$, skip to Step 4; otherwise, do the following:

    (a) decode $U_i$ given $M_{i+k}$, $M_{i+k-1}$, $\cdots$ , $M_i$.
    (b) generate $\hat{R}_i$ given $U_i$ and $M_{i+k}$, $M_{i+k-1}$, $\cdots$ , $M_i$, i.e., $\hat{R}_i = g_p(U_i, M_{i+k}, M_{i+k-1} \cdots , M_i)$, where $g_p$ denotes that the generation of the reconstructed residual is a function of the prediction information.
    (c) generate $P_i$ given $M_i$ and $\hat{X}_{i-1}$, $\cdots$, $\hat{X}_{i-k}$, where $\hat{X}_{i-1}$, $\cdots$ , $\hat{X}_{-k}$ use default reconstructions (e.g. blank blocks or blocks with known popular patterns). In other words, $P_i = f(M_i, \hat{X}_{i-1}, \cdots , \hat{X}_{i-k})$, where $f$ denotes the prediction generator.
    (d) reconstruct $\hat{X}_i = P_i + \hat{R}_i$. Store and output $\hat{X}_i$.

4. Increment $i$ by 1.
5. Repeat Steps 2-4 until $i = n + 1$.

In some example, to support applications with varying delay constraints, a binary flag might be used to signal whether delayed reconstruction is allowed or not for a group of image blocks: if the binary flag is cleared (set to 0), the traditional decoder is used; and if the binary flag is set, then the decoder with delayed reconstruction is used. In the latter case, further parsing or derivation of the parameter $k$ might be performed. For example, a unary code of $k$ - 1 might be used to code $k$: a sequence of 1's terminated by a single 0. On the decoder side, $k$ may be decoded by counting the number of 1's before the terminating 0 and incrementing that number by 1. Other codes may be used to signal the value of $k$ in other embodiments.

The following Table 1 illustrates the output order, from left to right, in the case of a traditional predictive coding decoder.

**Table 1 Output order of the traditional decoder**

| 1 | 2 | 3 | ... | ... | $i$ | $i$+1 | ... |
|---|---|---|---|---|---|---|---|
| $M_1$ | $M_2$ | $M_3$ | ... | ... | $Mi$ | $M_{i+1}$ | ... |
| $U_1$ | $U_2$ | $U_3$ | ... | ... | $U_i$ | $U_{i+1}$ | ... |
| $P_1$ | $P_2$ | $P_3$ | ... | ... | $P_i$ | $P_{i+1}$ | ... |
| $\hat{R}_1$ | $\hat{R}_2$ | $\hat{R}_3$ | ... | ... | $\hat{R}_i$ | $\hat{R}_{i+1}$ | ... |
| $\hat{X}_1$ | $\hat{X}_2$ | $\hat{X}_3$ | ... | ... | $\hat{X}_i$ | $\hat{X}_{i+1}$ | ... |

With one embodiment of a decoder that employs delayed reconstruction, the output from such a decoder (assuming $k$=1) appears as in Table 2, below.

**Table 2 Output order of the proposed decoder**

| 1 | 2 | 3 | ... | ... | $i$ | $i$+1 | ... |
|---|---|---|---|---|---|---|---|
| $M_1$ | $M_2$ | $M_3$ | ... | ... | $M_i$ | $M_i$+1 | ... |
|  | $U_1$ | $U_2$ | ... | ... | $U_{i-1}$ | $U_i$ | ... |
|  | $P_1$ | $P_2$ | ... | ... | $P_{i-1}$ | $P_i$ | ... |
|  | $\hat{R}_1$ | $\hat{R}_2$ | ... | ... | $\hat{R}_{i-1}$ | $\hat{R}_i$ | ... |
|  | $\hat{X}_1$ | $\hat{X}_2$ | ... | ... | $\hat{X}_{i-1}$ | $\hat{X}_i$ | ... |

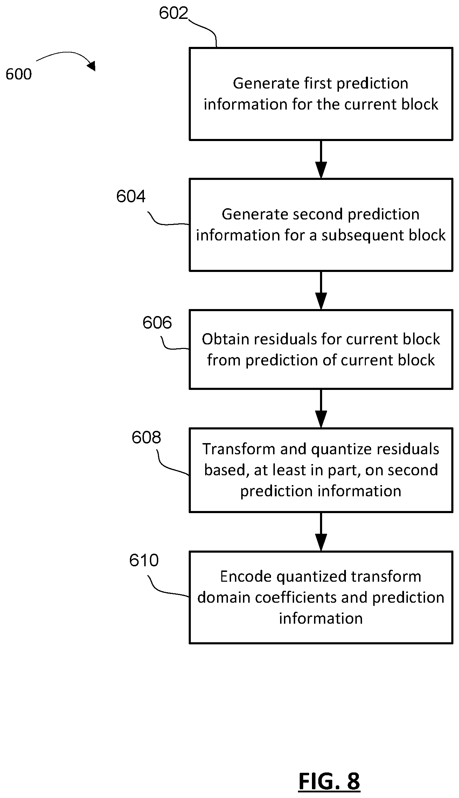

Reference is now made to Figure 8, which shows one example method 600 for encoding video data to produce a bitstream of encoded data in accordance with one embodiment of the present application. The method 600 includes generating first prediction information for a current block in operation 602 (it will be appreciated that the first prediction information may be generated and stored for later retrieval and use in the method 600). In operation 604, the encoder generates second prediction information for a subsequent block. The encoder then generates the prediction specified by the first prediction information and obtains residuals from the difference between the current block at its prediction, as indicated by operation 606.

In operation 608, the residuals are transformed and quantized, where the transformation and/or quantization is based, at least in part, on the second prediction information. This produced quantized transform domain coefficients, which are then entropy encoded in operation 610. The encoded bitstream includes both the second prediction information and the residual information, including the encoded quantized transform domain coefficients.

It will be appreciated that the above-described encoding process is a simplified example of encoding one block where the transform/quantization is at least partly based upon prediction information for a subsequent block. It will be understood that the generation of prediction information is often dependent upon having the reconstructed previous blocks available, meaning that the generation of prediction information for subsequent blocks should have the reconstructed current block available so that the process may evaluate whether to rely upon the reconstructed current block as a reference block. It will also be appreciated that the delayed reconstruction process means that the reconstructed current block is not necessarily available when generating the subsequent prediction information. There are a number of approaches that may be used to address this issue. One example process is to use the original blocks during prediction generation. Another example process is to use successive refinement of the prediction generation, perhaps starting with the original blocks.

In a simple example, the encoder determines $M_1, M_2, \cdots, M_n$ either in its entirety or $k$ steps ahead of $U_1, U_2, \cdots, U_n$. This can be achieved by running an encoder without reconstruction delay and record the relevant information for prediction generation, or by performing motion estimation/prediction generation on original $X_1, X_2, \cdots, X_n$. Then, for any $i$, the encoder:

1. determines $P_i$ from $M_i$ and $\hat{X}_{i-k}, \cdots, \hat{X}_{i-1}$;

2. determines $U_i$ from $P_i, X_i, \cdots, X_{i+k}$ and $M_{i+k}, M_{i+k-1}, \cdots, M_i$;

3. reconstructs $\hat{X}_i = P_i + \hat{R}_i$, where $\hat{R}_i$ is determined from $U_i$.

If more complexity can be afforded, then an example encoder may employ alternate minimization to learn $M_{i+k}$ and $U_i$ iteratively. Suppose that $M_1, \cdots, M_{i+k-1}$ and $\hat{X}_1, \cdots, \hat{X}_{i-1}$ are determined and fixed. Then $P_i$ is completely determined from $M_i$ and $X_{i-k}, \cdots, \hat{X}_{i-1}$. The example encoder does the following:

1. Initialize $j = 0$, and $\hat{R}_i^{(0)}$ (e.g. to all zeros).

2. Compute $M_{i+k}^{(j)}$ from $X_{i+1}, \cdots, , X_{i+k}$ and $\hat{X}_i^{(j)} = P_i + \hat{R}_i^{(j)}$ by reducing a rate distortion cost defined for $M_{i+k}^{(j)}, \hat{X}_i^{(j)}$, and $\hat{X}_i, \cdots, X_{i+k}$.

3. Fix $M_{i+k}^{(j)}$. Compute $U_i^{(j+1)}$ from $P_i, X_i, \cdots, X_{i+k}$ and $M_{i+k}, M_{i+k-1}, \cdots, M_i$ by reducing a rate distortion cost defined for $U_i^{(j+1)}, X_i, \cdots, X_{i+k}$ and $M_{i+k}^{(j)}, M_{i+k-1}, \cdots, M_i$.

4. Increment $j$ by 1. Repeat Steps 2-4 until the reduction in cost is below a prescribed threshold or the number of iterations $j$ is greater than an integer threshold.

5. Encode and transmit $M_{i+k}^{(j)}$ and $U_i^{(j+1)}$.

Reference is now made to Figure 8, which shows a simplified block diagram of an example of an encoder 900. The encoder 900 includes a processor 902, memory 904, and an encoding application 906. The encoding application 906 may include a computer program or application stored in memory 904 and containing instructions for configuring the processor 902 to perform operations such as those described herein. For example, the encoding application 906 may encode and output bitstreams encoded in accordance with the processes described herein. It will be understood that the encoding application 906 may be stored in on a computer readable medium, such as a compact disc, flash memory device, random access memory, hard drive, etc.

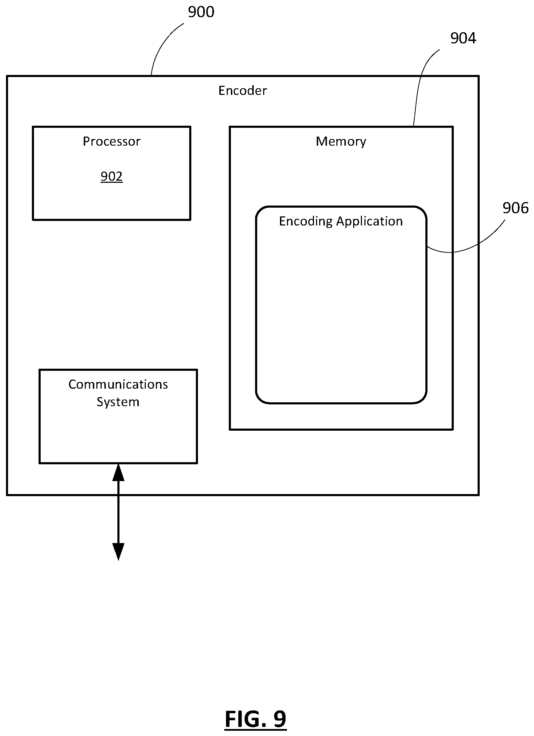

Reference is now also made to Figure 9, which shows a simplified block diagram of an example of a decoder 1000. The decoder 1000 includes a processor 1002, a memory 1004, and a decoding application 1006. The decoding application 1006 may include a computer program or application stored in memory 1004 and containing instructions for configuring the processor 1002 to perform operations such as those described herein. It will be understood that the decoding application 1006 may be stored in on a computer readable medium, such as a compact disc, flash memory device, random access memory, hard drive, etc.

It will be appreciated that the decoder and/or encoder according to the present application may be implemented in a number of computing devices, including, without limitation, servers, suitably-programmed general purpose computers, audio/video encoding and playback devices, set-top television boxes, television broadcast equipment, and mobile devices. The decoder or encoder may be implemented by way of software containing instructions for configuring a processor to carry out the functions described herein. The software instructions may be stored on any suitable non-transitory computer-readable memory, including CDs, RAM, ROM, Flash memory, etc.

It will be understood that the encoder described herein and the module, routine, process, thread, or other software component implementing the described method/process for configuring the encoder may be realized using standard computer programming techniques and languages. The present application is not limited to particular processors, computer languages, computer programming conventions, data structures, other such implementation details. Those skilled in the art will recognize that the described processes may be implemented as a part of computer-executable code stored in volatile or non-volatile memory, as part of an application-specific integrated chip (ASIC), etc.

## Claims

1. A method of encoding video data to generate a bitstream of encoded data using an encoder, the method comprising:

   retrieving first prediction information that specifies parameters for generating a prediction of a current block for reconstructing the current block;
   generating second prediction information that specifies parameters for a future prediction of a subsequent block, wherein the second prediction information provides a pixel reference count based on a number of times that a pixel in the reconstructed current block is referenced in prediction of a given number of future subsequent blocks;
   obtaining residuals for the current block using the prediction of the current block;
   transforming and quantizing the residuals based upon the second prediction information, to create quantized transform domain coefficients for the current block; and
   entropy encoding the quantized transform domain coefficients to produce a portion of the bitstream of encoded data,
   **characterized in that**:
   transforming and quantizing the residuals for the current block includes:

      selecting a transform unit size for a transform unit used for transforming based on said pixel reference count within the transform unit;
      the transform unit is formed by grouping pixels with a same pixel reference count in the reconstructed current block into the transform unit.

2. The method claimed in claim 1, wherein transforming and quantizing the residuals for the current block includes selecting a quantization parameter based on the second prediction information.

3. The method claimed in claim 1 or 2, wherein transforming and quantizing the residuals for the current block includes selecting a transform type based on the number of times a pixel in the reconstructed current block is referenced in prediction of the given number of future subsequent blocks.

4. The method claimed in any one of claims 1 to 3, wherein the entropy encoding of the quantized transform domain coefficients is based upon the second prediction information.

5. A method of decoding video data from a bitstream of encoded data using a decoder, the method comprising:

   retrieving first prediction information that specifies parameters for generating a prediction of a current block for reconstructing the current block;
   decoding second prediction information that specifies parameters for a future prediction of a subsequent block, wherein the second prediction information provides a pixel reference count based on a number of times that a pixel in the reconstructed current block is referenced in prediction of a given number of future subsequent blocks;
   decoding residual data syntax elements for the current block;
   reconstructing residuals for the current block based upon the residual data syntax elements and the second prediction information;

generating the prediction of the current block from the first prediction information and stored reconstructed data; and,

reconstructing the current block by adding the reconstructed residuals to the prediction of the current block; **characterized in that**:

reconstructing residuals for the current block includes:

selecting a transform unit size for a transform unit used for transforming based on said pixel reference count within the transform unit, wherein the transform unit is formed by grouping pixels with a same pixel reference count in the reconstructed current block into the transform unit.

6. The method claimed in claim 5, wherein reconstructing residuals for the current block includes selecting a transform type based on the number of times a pixel in the reconstructed current block is referenced in prediction of the given number of future subsequent blocks.

7. The method claimed in claim 5 or claim 6, wherein reconstructing residuals for the current block includes selecting a quantization parameter based on the second prediction information.

8. The method claimed in any one of claims 5 to 7, wherein the decoding of the residual data syntax elements is based upon the second prediction information.

9. An encoder to encode video data to generate a bitstream of encoded data, the encoder comprising:

memory storing the video data;

a processor;

an encoding application executable by the processor that, when executed, causes the processor to carry out the method claimed in any one of claims 1 to 4.

10. A decoder to decode video data from a bitstream of encoded data, the decoder comprising:

a processor;

a memory; and

a decoding application executable by the processor that, when executed, causes the processor to carry out the method claimed in any one of claims 6 to 8.

11. A non-transitory processor-readable medium storing processor-executable instructions which, when executed, configure one or more processors to perform the method claimed in any one of claims 1 to 8.

**Patentansprüche**

1. Verfahren zum Codieren von Videodaten zum Erzeugen eines Bitstroms von codierten Daten unter Verwendung eines Codierers, wobei das Verfahren Folgendes aufweist:

Abrufen von ersten Vorhersageinformationen, die Parameter zum Erzeugen einer Vorhersage eines aktuellen Blocks zum Rekonstruieren des aktuellen Blocks spezifizieren;

Erzeugen von zweiten Vorhersageinformationen, die Parameter für eine zukünftige Vorhersage eines nachfolgenden Blocks spezifizieren, wobei die zweiten Vorhersageinformationen eine Pixelreferenzzahl auf der Grundlage von einer Häufigkeit bereitstellen, mit der ein Pixel in dem rekonstruierten aktuellen Block in der Vorhersage einer gegebenen Anzahl von zukünftigen nachfolgenden Blöcken referenziert wird;

Erhalten von Residuen für den aktuellen Block unter Verwendung der Vorhersage des aktuellen Blocks;

Transformieren und Quantisieren der Residuen auf der Grundlage von den zweiten Vorhersageinformationen zum Erzeugen quantisierter Transformationsbereichskoeffizienten für den aktuellen Block; und

Entropiecodieren der quantisierten Transformationsbereichskoeffizienten zum Erzeugen eines Teils des Bitstroms von codierten Daten,

**dadurch gekennzeichnet, dass**:

das Transformieren und Quantisieren der Residuen für den aktuellen Block Folgendes beinhaltet:

Auswählen einer Transformationseinheitsgröße für eine Transformationseinheit, die zum Transformieren verwendet wird, auf der Grundlage der Pixelreferenzzahl innerhalb der Transformationseinheit; die Transformationseinheit durch Gruppieren von Pixeln mit einer gleichen Pixelreferenzzahl in dem rekonstruierten aktuellen Block in die Transformationseinheit gebildet wird.

2. Verfahren nach Anspruch 1, wobei das Transformieren und Quantisieren der Residuen für den aktuellen Block das Auswählen eines Quantisierungsparameters auf der Grundlage von den zweiten Vorhersageinformationen beinhaltet.

3. Verfahren nach Anspruch 1 oder 2, wobei das Transformieren und Quantisieren der Residuen für den aktuellen Block das Auswählen eines Transformationstyps auf der Grundlage der Häufigkeit beinhaltet, mit der ein Pixel in dem rekonstruierten aktuellen Block in der Vorhersage der gegebenen Anzahl von zukünftigen nachfolgenden Blöcken referenziert wird.

4. Verfahren nach einem der Ansprüche 1 bis 3, wobei das Entropiecodieren der quantisierten Transformationsbereichskoeffizienten auf den zweiten Vorhersageinformationen beruht.

5. Verfahren zum Decodieren von Videodaten aus einem Bitstrom von codierten Daten unter Verwendung eines Decodierers, wobei das Verfahren Folgendes aufweist:

Abrufen von ersten Vorhersageinformationen, die Parameter zum Erzeugen einer Vorhersage eines aktuellen Blocks zum Rekonstruieren des aktuellen Blocks spezifizieren;
Decodieren von zweiten Vorhersageinformationen, die Parameter für eine zukünftige Vorhersage eines nachfolgenden Blocks spezifizieren, wobei die zweiten Vorhersageinformationen eine Pixelreferenzzahl auf der Grundlage von einer Häufigkeit bereitstellen, mit der ein Pixel in dem rekonstruierten aktuellen Block in der Vorhersage einer gegebenen Anzahl von zukünftigen nachfolgenden Blöcken referenziert wird;
Decodieren von Syntaxelementen von Residuendaten für den aktuellen Block;
Rekonstruieren von Residuen für den aktuellen Block auf der Grundlage von den Syntaxelementen von Residuendaten und den zweiten Vorhersageinformationen;
Erzeugen der Vorhersage des aktuellen Blocks aus den ersten Vorhersageinformationen und den gespeicherten rekonstruierten Daten; und
Rekonstruieren des aktuellen Blocks durch Hinzufügen der rekonstruierten Residuen zu der Vorhersage des aktuellen Blocks;
**dadurch gekennzeichnet, dass**:
das Rekonstruieren von Residuen für den aktuellen Block Folgendes beinhaltet:
Auswählen einer Transformationseinheitsgröße für eine Transformationseinheit, die zum Transformieren verwendet wird, auf der Grundlage von der Pixelreferenzzahl innerhalb der Transformationseinheit, wobei die Transformationseinheit durch Gruppieren von Pixeln mit einer gleichen Pixelreferenzzahl in dem rekonstruierten aktuellen Block in die Transformationseinheit gebildet wird.

6. Verfahren nach Anspruch 5, wobei das Rekonstruieren von Residuen für den aktuellen Block ein Auswählen eines Transformationstyps auf der Grundlage der Häufigkeit beinhaltet, mit der ein Pixel in dem rekonstruierten aktuellen Block in der Vorhersage der gegebenen Anzahl von zukünftigen nachfolgenden Blöcken referenziert wird.

7. Verfahren nach Anspruch 5 oder 6, wobei das Rekonstruieren von Residuen für den aktuellen Block ein Auswählen eines Quantisierungsparameters auf der Grundlage von den zweiten Vorhersageinformationen beinhaltet.

8. Verfahren nach einem der Ansprüche 5 bis 7, wobei das Decodieren der Syntaxelemente von Residuendaten auf den zweiten Vorhersageinformationen beruht.

9. Codierer zum Codieren von Videodaten zum Erzeugen eines Bitstroms von codierten Daten, wobei der Codierer Folgendes aufweist:

einen Speicher, der die Videodaten speichert;
einen Prozessor;
eine Codieranwendung, die von dem Prozessor ausführbar ist, die, wenn sie ausgeführt wird, den Prozessor veranlasst, das Verfahren nach einem der Ansprüche 1 bis 4 auszuführen.

10. Decodierer zum Decodieren von Videodaten aus einem Bitstrom von codierten Daten, wobei der Decodierer Folgendes aufweist:

einen Prozessor;
einen Speicher; und
eine Decodieranwendung, die von dem Prozessor ausführbar ist, die, wenn sie ausgeführt wird, den Prozessor veranlasst, das Verfahren nach einem der Ansprüche 6 bis 8 auszuführen.

11. Nicht-transitorisches, von einem Prozessor lesbares Medium, das von einem Prozessor ausführbare Anweisungen speichert, die, wenn sie ausgeführt werden, einen oder mehrere Prozessoren dazu konfigurieren, das Verfahren nach einem der Ansprüche 1 bis 8 auszuführen.

**Revendications**

1. Procédé de codage de données vidéo pour générer un flux binaire de données codées en utilisant un codeur, le procédé comprenant :

la récupération de premières informations de prédiction qui spécifient des paramètres pour générer une prédiction d'un bloc courant pour reconstruire le bloc courant ;
la génération de secondes informations de prédiction qui spécifient des paramètres pour une prédiction future d'un bloc suivant, dans lequel les secondes informations de prédiction fournissent un compte de référence de pixels sur la base d'un nombre de fois qu'un pixel dans le bloc courant reconstruit est référencé dans la prédiction d'un nombre donné de blocs suivants futurs ;
l'obtention de résidus pour le bloc courant en utilisant la prédiction du bloc courant ;
la transformation et la quantification des résidus sur la base des secondes informations de prédiction, pour créer des coefficients de domaine de transformée quantifiés pour le bloc courant ; et
le codage entropique des coefficients de domaine de transformée quantifiés pour produire une partie du flux binaire de données codées,
**caractérisé en ce que** :
la transformation et la quantification des résidus pour le bloc courant comprennent :

la sélection d'une taille d'unité de transformée pour une unité de transformée utilisée pour la transformation sur la base dudit compte de référence de pixels dans l'unité de transformée ;
l'unité de transformée est formée en regroupant des pixels avec un même compte de référence de pixels dans le bloc courant reconstruit dans l'unité de transformée.

2. Procédé selon la revendication 1, dans lequel la transformation et la quantification des résidus pour le bloc courant comprennent la sélection d'un paramètre de quantification sur la base des secondes informations de prédiction.

3. Procédé selon la revendication 1 ou 2, dans lequel la transformation et la quantification des résidus pour le bloc courant comprennent la sélection d'un type de transformée sur la base du nombre de fois qu'un pixel dans le bloc courant reconstruit est référencé dans la prédiction du nombre donné de blocs suivants futurs.

4. Procédé selon l'une quelconque des revendications 1 à 3, dans lequel le codage entropique des coefficients de domaine de transformée quantifiés est basé sur les secondes informations de prédiction.

5. Procédé de décodage de données vidéo à partir d'un flux binaire de données codées en utilisant un décodeur, le procédé comprenant :

la récupération de premières informations de prédiction qui spécifient des paramètres pour générer une prédiction d'un bloc courant pour reconstruire le bloc courant ;
le décodage de secondes informations de prédiction qui spécifient des paramètres pour une prédiction future d'un bloc suivant, dans lequel les secondes informations de prédiction fournissent un compte de référence de pixels sur la base d'un nombre de fois qu'un pixel dans le bloc courant reconstruit est référencé dans la prédiction d'un nombre donné de blocs suivants futurs ;
le décodage d'éléments de syntaxe de données résiduelles pour le bloc courant ;
la reconstruction de résidus pour le bloc courant sur la base des éléments de syntaxe de données résiduelles et des secondes informations de prédiction ;

la génération de la prédiction du bloc courant à partir des premières informations de prédiction et de données reconstruites stockées ; et

la reconstruction du bloc courant en ajoutant les résidus reconstruits à la prédiction du bloc courant ;

**caractérisé en ce que** :

la reconstruction de résidus pour le bloc courant comprend :

la sélection d'une taille d'unité de transformée pour une unité de transformée utilisée pour la transformation sur la base dudit compte de référence de pixels dans l'unité de transformée, dans lequel l'unité de transformée est formée en regroupant des pixels avec un même compte de référence de pixels dans le bloc courant reconstruit dans l'unité de transformée.

6. Procédé selon la revendication 5, dans lequel la reconstruction de résidus pour le bloc courant comprend la sélection d'un type de transformée sur la base du nombre de fois qu'un pixel dans le bloc courant reconstruit est référencé dans la prédiction du nombre donné de blocs suivants futurs.

7. Procédé selon la revendication 5 ou 6, dans lequel la reconstruction de résidus pour le bloc courant comprend la sélection d'un paramètre de quantification sur la base des secondes informations de prédiction.

8. Procédé selon l'une quelconque des revendications 5 à 7, dans lequel le décodage des éléments de syntaxe de données résiduelles est basé sur les secondes informations de prédiction.

9. Codeur pour coder des données vidéo pour générer un flux binaire de données codées, le codeur comprenant :

une mémoire stockant les données vidéo ;

un processeur ;

une application de codage exécutable par le processeur qui, lorsqu'elle est exécutée, amène le processeur à réaliser le procédé selon l'une quelconque des revendications 1 à 4.

10. Décodeur pour décoder des données vidéo à partir d'un flux binaire de données codées, le décodeur comprenant :

un processeur ;

une mémoire ; et

une application de décodage exécutable par le processeur qui, lorsqu'elle est exécutée, amène le processeur à réaliser le procédé selon l'une quelconque des revendications 6 à 8.

11. Support lisible par processeur non transitoire stockant des instructions exécutables par processeur qui, lorsqu'elles sont exécutées, configurent un ou plusieurs processeurs pour réaliser le procédé selon l'une quelconque des revendications 1 à 8.

**FIG. 1**

50

32                    34

14

Entropy
Decoder $\xrightarrow{U_i}$ Residual
Reconstructor $\xrightarrow{\widehat{R}_i}$ $\oplus$ $\xrightarrow{\widehat{X}_i}$ 16

$M_i$

36

$P_i$

Prediction
Generator

$\widehat{X}_{i-n}$

Memory

$\widehat{X}_{i-1}, \widehat{X}_{i-2}, ...$

38

**FIG. 2**

**FIG. 3**

**FIG. 4**

300

FIG. 5

402

400

Retrieve first prediction
information $M_i$

404

Decode second prediction
information for generating a
prediction of a subsequent
block

405

Decode residual information $U_i$

406

Reconstruct residuals based on
residual information and second
prediction information

408

Generate prediction of current
block from first prediction
information

410

Reconstruct current block from
prediction and reconstructed
residual

**FIG. 6**

500

$U_{i+k}$

**FIG. 7**

602

600

Generate first prediction
information for the current block

604

Generate second prediction
information for a subsequent block

606

Obtain residuals for current block
from prediction of current block

608

Transform and quantize residuals
based, at least in part, on second
prediction information

610

Encode quantized transform
domain coefficients and prediction
information

**FIG. 8**

900

904

906

Encoder

Processor

902

Memory

Encoding Application

Communications
System

**FIG. 9**

1000

1004

Decoder

Processor

1002

Memory

Decoding Application

1006

Communications
System

**FIG. 10**

**REFERENCES CITED IN THE DESCRIPTION**

**Patent documents cited in the description**

- US 2015208082 A